# EUROPEAN PATENT SPECIFICATION

(11) **EP 1 859 970 B1**
(45) Date of publication and mention of the grant of the patent: **30.09.2009**
(21) Application number: 07003762.7
(22) Date of filing: 23.02.2007
(51) Int. Cl.: B60G 7/00, B62D 17/00

(54) **Rear wheel toe angle control system of vehicle**
Hinterradspurwinkelsteuerungssystem eines Fahrzeugs
Système de contrôle d'angle de pincement de roue arrière de véhicule

(30) Priority: 25.05.2006 KR 20060046941
(43) Date of publication of application: 28.11.2007
(73) Proprietor: Mando Corporation, Seoul 135-739 (KR)
(72) Inventor: Byong Soo Kwon, Giheung-gu Yongin-si Gyeonggi-do 446-578 (KR)
(74) Representative: Bosch, Matthias

(56) References cited:
- EP-A2- 0 827 893
- DE-A1- 3 736 229
- GB-A- 2 155 869
- GB-A- 2 202 198
- JP-A- 4 031 113
- JP-A- 62 018 309
- US-A- 5 143 400

## Description

### BACKGROUND OF THE INVENTION

### 1. Field of Invention

The present invention relates to a vehicle posture control system for improving handling stability by controlling a posture of the vehicle, and more particularly, to a rear wheel toe angle control system of a vehicle, in which both rear wheels with toe angles changeable according to a driving state of the vehicle are operated by a single reduction gear, whereby the toe angles of both the rear wheels are synchronized to be always constantly changed and also the vehicle may reduce its size and weight.

### 2. Description of the Prior Art

In general, a suspension installed to a vehicle is provided between a vehicle body and a wheel and connects both the rigid bodies to each other using one or more links. The suspension includes a trailing arm, a knuckle, a control arm and the like.

The suspension effectively absorbs irregular inputs of a road surface occurring in vehicle driving, thereby providing ride comfort. Also, the suspension appropriately controls the roll of the vehicle body caused from driver's steering or unevenness of a road surface, thereby giving convenience to the driver. In addition, the suspension keeps vertical loads on a contact surface of a tire at a suitable level when the vehicle runs on an irregular road, thereby ensuring handling stability of the vehicle when the vehicle turns or is braked.

Meanwhile, when a vehicle turns, it may oversteer or understeer due to vehicle velocity or friction with the road surface, thereby deteriorating the handling stability of the vehicle. In order to solve this problem, the Korean Patent No. 511742 (August 25, 2005) issued to the present applicant discloses a rear wheel toe angle control system (AGCS: Active Geometry Controlled System) for improving posture control and handling stability of a vehicle by controlling the length of a rear control arm and therefore rear wheel toe angles when a vehicle turns.

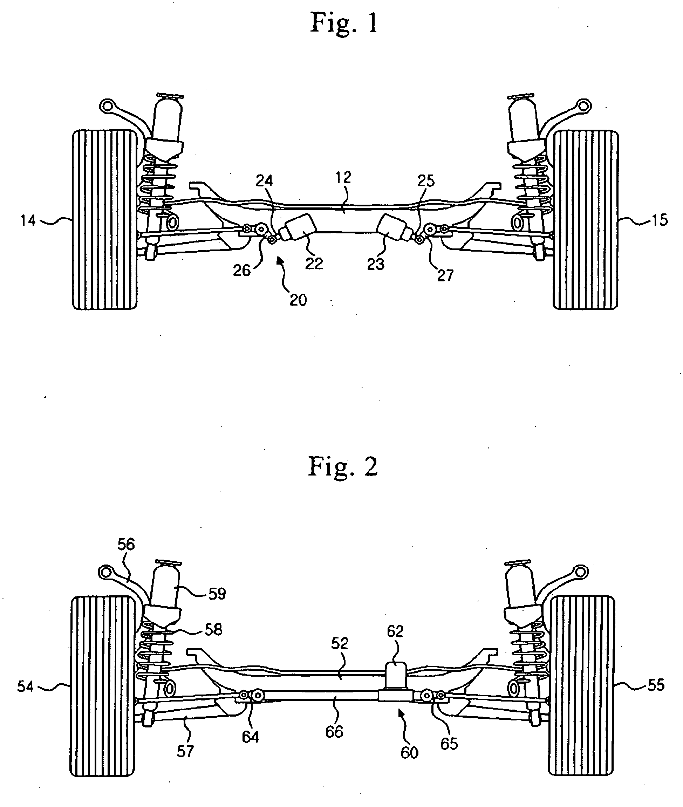

FIG. 1 is a view showing a rear wheel toe angle control system of a vehicle according to a prior art. Referring to FIG. 1, a rear wheel toe angle control system 20 includes a pair of actuators 22 and 23 respectively installed to the left and right ends of a rear cross member 12, and links 26 and 27 for connecting the actuators 22 and 23 to left and right rear wheels 14 and 15 and changing toe angles of the left and right rear wheels 14 and 15 by means of rods 24 and 25 installed to the actuators 22 and 23 to be translated.

The actuators 22 and 23 are hydraulic actuators. As the rods 24 and 25 of the actuators 22 and 23 are translated, the links 26 and 27 control the toe angles of the left and right rear wheels 14 and 15.

The conventional rear wheel toe angle control system 20 of a vehicle so configured operates the actuators 22 and 23 when the vehicle turns to prevent the vehicle from oversteering or understeering.

However, the conventional rear wheel toe angle control system 20 of a vehicle cannot rapidly control the toe angles of the rear wheels 14 and 15 since the actuators 22 and 23 are hydraulically operated with a slow response. In addition, in the prior art, there are provided the two actuators 22 and 23 for controlling the left and right rear wheels 14 and 15. Accordingly, there is a limit in installing the actuators 22 and 23 due to a narrow installation space, and the two actuators 22 and 23 increase weight and manufacturing costs of a vehicle. In addition, since the two actuators 22 and 23 are used in the prior art, the toe angles of the left and right rear wheels 14 and 15 may be controlled differently, which results in unstable control of a posture of the vehicle.

### Generic

JP-A-62018309 discloses a rear wheel suspension means in a dual link strut system equipped with front and rear arms in pairs, and the basic edge of the front arm is supported onto a body-side bracket. The rear arm is arranged in slidable ways. The rear arm is connected to a screw cylinder through a ball joint and said screw cylinder is screwed with the screw part in the mutual reverse screw form at the both edges of a driving shaft. Said driving shaft is revolved through a deceleration gear train by the operation of a control motor, and said control motor is controlled by a controller so that the toe angle θ of the rear wheel becomes zero, when the car speed detected by a car speed sensor is a prescribed value (e.g. 60 km/h) or less, and the toe angle θ increases on the toe-side when the car speed is over the prescribed value.

### SUMMARY OF THE INVENTION

The present invention is to provide a rear wheel toe angle control system, in which as an actuator for controlling rear wheels of a vehicle, an electric-powered one is used for rapid operation thereof, thereby ensuring handling stability, the left and right rear wheels are operated by the single actuator to reduce weight and manufacturing costs of a vehicle, and toe angles of the left and right rear wheels are identically controlled to improve handling stability of a vehicle.

According to an aspect of the present invention for achieving the objects, there is provided a rear wheel toe angle control system of a vehicle, comprising a rack bar received in a case installed in parallel with a cross member supporting left and right rear wheels; left and right link members having one ends respectively connected to the left and right rear wheels and the other ends respectively connected to ends of the rack bar; and an actuator installed to the rack bar to cooperate therewith, the actuator moving the rack bar so that the left and right link members change toe angles of the left and right rear wheels at the same time. Furthermore, the rear wheel toe angle control system further comprises a magnetic ring installed to a worm gear of the reduction gear of the actuator and a magnetic sensor installed to sense a magnetic force of the magnetic ring, wherein a linear displacement of the rack bar is measured from a rotation amount of the magnetic ring, a gear ratio of the reduction gear and a pitch ratio of rack teeth of the rack bar.

The actuator may include a motor used as a driving source; a reduction gear having a worm gear installed to a rotary shaft of the motor and a worm wheel meshed with the worm gear to rotate; and a pinion gear installed on a rotary shaft of the worm wheel to be meshed with rack teeth of the rack bar to move the rack bar. Here, the pinion gear may be press fitted into and fixed to a central portion of the worm wheel. In addition, the rear wheel toe angle control system may further comprise a limit switch installed on a moving line of the rack bar to detect an end of the rack bar, thereby controlling an initial position of the rack bar and operation of the actuator when the rack bar is excessively moved.

### BRIEF DESCRIPTION OF THE DRAWINGS

The above and other objects, features and advantages of the present invention will become apparent from the following description of a preferred embodiment given in conjunction with the accompanying drawings, in which:
FIG. 1 is a view showing a rear wheel toe angle control system of a vehicle according to a prior art;
FIG. 2 is a view showing a rear wheel toe angle control system of a vehicle according to the present invention; and
FIG. 3 is a perspective view schematically showing the rear wheel toe angle control system of a vehicle according to the present invention.

### DETAILED DESCRIPTION OF THE PREFERRED EMBODIMENT

Hereinafter, a preferred embodiment of the present invention will be described in detail with reference to the accompanying drawings.

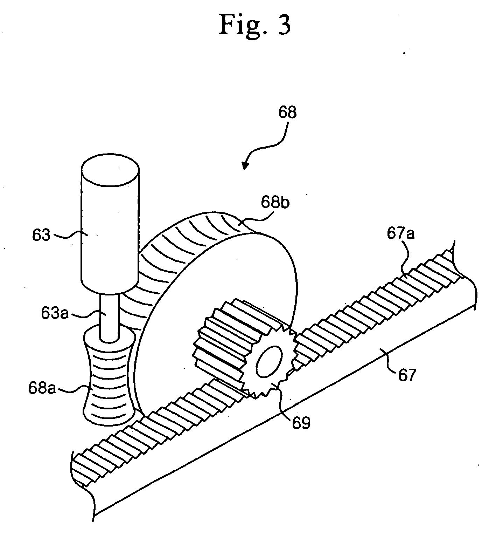

FIG. 2 is a view showing a rear wheel toe angle control system of a vehicle according to the present invention, and FIG. 3 is a perspective view schematically showing the rear wheel toe angle control system of a vehicle according to the present invention.

Referring to FIGS. 2 and 3, left and right rear wheels 54 and 55 of a vehicle are suspended by a rear cross member 52. At this time, the rear wheels 54 and 55 are coupled to knuckles 56, which are supported by control arms 57 in a lateral direction of the vehicle and supported by trailing arms (not shown) in a longitudinal direction of the vehicle. In addition, each of the knuckles 56 is supported by a spring 58 and a shock absorber 59 in a vertical direction.

Meanwhile, a rear wheel toe angle control system 60 is installed to the left and right rear wheels 54 and 55 to change toe angles of the rear wheels 54 and 55 when the vehicle turns.

The rear wheel toe angle control system 60 includes a case 66 installed in parallel with the cross member 52 and a rack bar 67 received in the case 66. The rack bar 67 is movably supported in the case 66, and a plurality of rack teeth 67a are formed on a surface of the rack bar 67.

In addition, a pair of link members 64 and 65 connected to the left and right rear wheels 54 and 55 are connected to both ends of the rack bar 67, respectively. The link members 64 and 65 are movably installed, and each of them may be composed of one or more members and its rotation center may be fixed to a side of the cross member 52.

Meanwhile, the link members 64 and 65 control the toe angles of the rear wheels 54 and 55 by the translation of the rack bar 67. To this end, an actuator 62 is installed in order to translate the rack bar 67.

Accordingly, as the actuator 62 operates, the rack bar 67 is moved to move the link members 64 and 65, whereby the toe angles of the left and right rear wheels 54 and 55 are changed at the same time. That is, when the vehicle turns, one of the left and right rear wheels 54 and 55 is toed in and the other is toed out according to the turning direction, thereby controlling the posture of the turning vehicle.

The actuator 62 includes a housing, and a motor 63 installed in the housing, and a reduction gear 68 is connected to a rotary shaft of the motor 63. The reduction gear 68 includes a worm gear 68a coupled to the rotary shaft 63a of the motor 63, and a worm wheel 68b meshed with the worm gear 68a, so that a rotation speed of the worm wheel 68b is reduced according to a gear ratio of the worm gear 68a and the worm wheel 68b.

In addition, a pinion gear 69 meshed with the rack bar 67 is installed to the worm wheel 68b of the reduction gear 68. The pinion gear 69 may be installed on a rotary shaft 63a of the worm wheel 68b, and is preferably press fitted into and fixed to a central hole of the worm wheel 68b. In addition, a bearing (not shown) is installed to an upper portion of the rotary shaft of the worm wheel 68b, and the bearing is fixedly installed to the housing.

Here, the motor 63 is an electric-powered motor, preferably a DC motor. In this embodiment, the motor 63 is operated at an input voltage of DC 10 to 16V and a rated input voltage of 13.5V.

In addition, in order to measure a rotation amount of the motor 63, a magnetic ring is installed to the worm gear 68a and a magnetic sensor is installed at a position adjacent to the magnetic ring so as to detect a magnetic force of the magnetic ring. A magnetic signal detected from the magnetic sensor is sent to a central processing unit of the vehicle, and a rotation amount of the worm gear 68b is measured by the central processing unit.

Meanwhile, a linear displacement of the rack bar 67 is measured from the rotation amount of the worm gear 68a measured from the rotation amount of the magnetic ring, a gear ratio of the reduction gear 68, and a pitch ratio of the rack teeth 67a of the rack bar 67. Then, the toe angles of the left and right rear wheels 54 and 55 are controlled according to the linear displacement of the rack bar 67.

A limit switch is installed on a moving line of the rack bar 67 so as to limit a stroke range of the rack bar 67. The limit switch senses an initial position of the rack bar 67 to set a reference position of the rack bar 67, and then senses an end of the rack bar 67 when the rack bar 67 is excessively moved thereby controlling the operation of the actuator 62 to stop.

According to the rear wheel toe angle control system 60 of a vehicle configured as described above, the single actuator 62 causes the left and right rear wheels 54 and 55 to be changed together, thereby improving the reliability of the posture control.

The operation of the rear wheel toe angle control system of a vehicle so configured will be described as follows.

When a vehicle runs, particularly turns, it may understeer or oversteer due to gravity of a vehicle body or friction with a road surface. At this time, the actuator 62 of the rear wheel toe angle control system 60 is operated to prevent the vehicle from understeering or oversteering. More specifically, if power is supplied to the motor 63 of the actuator 62, the motor 63 rotates and transmits the rotating force to the reduction gear 68.

The reduction gear includes the worm gear 68a installed to the rotary shaft 63a of the motor 63, and the worm wheel 68b meshed with the worm gear 68a, and reduces the rotation speed of the worm wheel 68b according to a gear ratio of the worm gear 68a and the worm wheel 68b.

The worm wheel 68b of which the rotation speed is controlled by the reduction gear 68 as mentioned above rotates the pinion gear 69 press fitted to the center portion of the worm wheel 68b, and accordingly the pinion gear 69 rotates to move the rack bar 67.

The rack bar 67 is moved in one of the left and right side directions, thereby moving the link members 64 and 65 connected to the left and right rear wheels 54 and 55. Accordingly, the link members 64 and 65 controls the toe angles of the left and right rear wheels 54 and 55 at the same time, and cause one of them to be toed in and the other to be toed out, thereby preventing the vehicle from understeering or oversteering.

That is, the rear wheel toe angle control system 60 controls an unstable posture of the vehicle caused by the toe-out of the suspension generated when the vehicle turns by controlling the outer wheel to be toed in and the inner wheel to be toed out by means of the actuator 62, thereby ensuring the stable posture control and therefore the handling stability of the vehicle through the frictional force between the tire and the road surface.

At this time, the toe angles of the rear wheels 54 and 55 may be controlled according to the linear displacement of the rack bar 67. To this end, a magnetic force of the magnetic ring installed to the worm gear 68a is measured from the magnetic sensor, so that a rotation amount of the motor 63 is determined from the rotation amount of the magnetic ring, and the linear displacement of the rack bar 67 can be measured according to a gear ratio of the reduction gear 68 and a pitch ratio of the rack teeth 67a of the rack bar 67.

Meanwhile, an initial start position of the rack bar 67 is set by the limit switch, so that a stroke range of the rack bar 67 is accurately controlled. In addition, the limit switch senses the end of the rack bar 67 and controls the operation of the actuator 62 so that the rack bar 67 is not excessively moved.

According to the rear wheel toe angle control system of a vehicle of the present invention so configured, the toe angles of the rear wheels are operated by the electric-powered actuator having good response and rapid operation, whereby the handling stability can be improved. In addition, since the left and right rear wheels are operated by the single actuator, the handling stability is further improved by the control of the toe angles of the left and right rear wheels. Moreover, the rear wheel toe angle control system has a small size, thereby ensuring easy installation and reducing the weight and manufacturing costs of the vehicle.

As mentioned above, the rear wheel toe angle control system of a vehicle according to the present invention has been illustrated with reference to the accompanying drawings, but the present invention is not limited to the aforementioned embodiments and drawings. It will be apparent that those skilled in the art can make various modifications and changes thereto within the scope of the invention defined by the claims.

For example, although the reduction gear is configured to have a single gear ratio by the worm gear and the worm wheel, it is also possible that the reduction gear has a variety of gear ratios by installing a plurality of worm gears and worm wheels in multistage and a clutch means. However, in the embodiment of the preset invention, the reduction gear is illustrated to have a single reduction ratio in consideration of its installation space and size.

## Claims

1. A rear wheel toe angle control system of a vehicle, comprising:
a rack bar (67) received in a case (66) installed in parallel with a cross member (52) supporting left and right wheels (54, 55);
left an right link members (64, 65) having one ends respectively connected to the left and right rear wheels (54, 55) and the other ends respectively connected to ends of the rack bar (67); and
an actuator (62) installed to the rack bar (67) to cooperate therewith, the actuator (62) moving the rack bar (67) so that the left and right link members (64, 65) change toe angles of the left and right rear wheels (54, 55) at the same time, the rear wheel toe angle control system being **characterized by**
a magnetic ring installed to a worm gear (68a) of the reduction gear (68) of the actuator (62) and a magnetic sensor installed to sense a magnetic force of the magnetic ring, wherein a linear displacement of the rack bar (67) is measured from a rotation amount of the magnetic ring, a gear ratio of the reduction gear (68) an a pitch ratio of rack teeth (67a) of the rack bar (67).

2. The rear wheel toe angle control system as claimed in claim 1, wherein the actuator (62) includes a motor (63) used as a driving source; a reduction gear (68) having a worm gear (68a) installed to a rotary shaft (63a) of the motor (63) and a worm wheel (68b) meshed with the worm gear (68a) to rotate; and a pinion gear (69) installed on a rotary shaft (63a) of the worm wheel (68b) to be meshed with rack teeth (67a) of the rack bar (67) to move the rack bar (67).

3. The rear wheel toe angle control system as claimed in claim 2, wherein the pinion gear (69) is press fitted into and fixed to a central portion of the worm wheel (68b).

4. The rear wheel toe angle control system as claimed in any of claims 1 to 3, further comprising a limit switch installed on a moving line of the rack bar (67) to detect an end of the rack bar (67), thereby controlling an initial position of the rack bar (67) and operation of the actuator (62) when the rack bar (67) is excessively moved.

## Patentansprüche

1. Hinterrad-Spurwinkel-Steuerungssystem eines Fahrzeugs, das aufweist:
eine Zahnstange (67), die in einem Gehäuse (66) aufgenommen ist, das parallel zu einem Achsträger (52) angebracht ist, der linke und rechte Räder (54, 55) stützt;
linke und rechte Verbindungselemente (64, 65), von denen jeweils ein Ende mit den linken und rechten Hinterrädern (54, 55) verbunden ist, und das jeweils andere Ende mit den Enden der Zahnstange (67) verbunden ist; und
ein Betätigungselement (62), das an der Zahnstange (67) so angebracht ist, dass es damit zusammenwirkt, wobei das Betätigungselement (62) die Zahnstange (67) bewegt, so dass die linken und rechten Verbindungselemente (64, 65) die Spurwinkel der linken und rechten Hinterräder (54, 55) gleichzeitig ändern, wobei das Hinterrad-Spurwinkel-Steuerungssystem **gekennzeichnet ist durch**
einen magnetischen Ring, der an einem Schneckengetriebe (68a) des Untersetzungsgetriebes (68) des Betätigungselements (62) angebracht ist, und einen magnetischen Sensor, der so angebracht ist, dass er die Magnetkraft des magnetischen Rings abfühlt, wobei eine lineare Verschiebung der Zahnstange (67) aus dem Umdrehungsbetrag des magnetischen Rings, dem Übersetzungsverhältnis des Untersetzungsgetriebes (68) und dem Abstandsverhältnis der Zähne (67a) der Zahnstange (67) gemessen wird.

2. Hinterrad-Spurwinkel-Steuerungssystem nach Anspruch 1, wobei das Betätigungselement (52) einen Motor (63) aufweist, der als Antriebsquelle verwendet wird; ein Untersetzungsgetriebe (58) mit einem Schneckengetriebe (68a), das an einer Drehwelle (63a) des Motors (63) angebracht ist, und einem Schneckenrad (68b), das mit dem Schneckengetriebe (68a) drehend in Eingriff steht; und ein Ritzel (69), das an einer Drehwelle (63a) des Schneckenrads (68b) so angebracht ist, dass es mit Zähnen (67a) der Zahnstange (67) in Eingriff gebracht wird, um die Zahnstange (67) zu bewegen.

3. Hinterrad-Spurwinkel-Steuerungssystem nach Anspruch 2, wobei das Ritzel (69) in einen Zentralbereich des Schneckenrads (68b) eingepresst und daran befestigt ist.

4. Hinterrad-Spurwinkel-Steuerungssystem nach einem der Ansprüche 1 bis 3, das des Weiteren einen Begrenzungsschalter aufweist, der auf einer Bewegungslinie der Zahnstange (67) angebracht ist, um das Ende der Zahnstange (67) festzustellen, wodurch die Anfangsposition der Zahnstange (67) und der Betrieb des Betätigungselements (62) gesteuert wird, wenn die Zahnstange (67) übermäßig bewegt wird.

## Revendications

1. Système de commande d'angle de pincement des roues arrière d'un véhicule, comprenant :
une crémaillère (67) reçue dans un boîtier (66) installé en parallèle avec une traverse (52) supportant des roues gauche et droite (54, 55) ;
des éléments de liaison gauche et droit (64, 65) ayant une extrémité respectivement reliée aux roues arrière gauche et droite (54, 55) et l'autre extrémité respectivement reliée aux extrémités de la crémaillère (67) ; et
un actionneur (62) installé sur la crémaillère (67) pour coopérer avec celle-ci, l'actionneur (62) déplaçant la crémaillère (67) de telle sorte que les éléments de liaison gauche et droit (64, 65) changent les angles de pincement des roues arrière gauche et droite (54, 55) en même temps, le système de commande d'angle de pincement des roues arrière étant **caractérisé par**
une bague magnétique installée sur une roue à vis sans fin (68a) de l'engrenage de réduction (68) de l'actionneur (62), et un capteur magnétique installé pour détecter une force magnétique de la bague magnétique, dans lequel un déplacement linéaire de la crémaillère (67) est mesuré à partir d'une quantité de rotation de la bague magnétique, d'un rapport d'engrenage de l'engrenage de réduction (68) et d'un rapport de pas des dents de crémaillère (67a) de la crémaillère (67).

2. Système de commande d'angle de pincement des roues arrière selon la revendication 1, dans lequel l'actionneur (62) inclut un moteur (63) utilisé comme une source d'entraînement ; un engrenage de réduction (68) ayant une roue à vis sans fin (68a) installée sur un arbre rotatif (63a) du moteur (63) et une vis sans fin (68b) engrenée avec la roue à vis sans fin (68a) pour tourner ; et un pignon (69) installé sur un arbre rotatif (63a) de la vis sans fin (68b) destiné à s'engrener avec les dents de crémaillère (67a) de la crémaillère (67) pour déplacer la crémaillère (67).

3. Système de commande d'angle de pincement des roues arrière selon la revendication 2, dans lequel le pignon (69) est ajusté par pression et fixé sur une partie centrale de la vis sans fin (68b).

4. Système de commande d'angle de pincement des roues arrière selon l'une quelconque des revendications 1 à 3, comprenant en outre un contact de fin de course installé sur une ligne de déplacement de la crémaillère (67) pour détecter une extrémité de la crémaillère (67), commandant ainsi une position initiale de la crémaillère (67) et le fonctionnement de l'actionneur (62) lorsque la crémaillère (67) est déplacée de façon excessive.
